# EUROPEAN PATENT APPLICATION

(11) **EP 0 887 013 A1**
(43) Date of publication of application: **30.12.1998**
(21) Application number: 97943185.5
(22) Date of filing: 13.10.1997
(51) Int. Cl.: A01G 1/00, A01G 31/00

(54) **METHOD FOR PRODUCING POTATO TUBERS**

(30) Priority: 14.10.1996 JP 271045/96
(71) Applicant: THE JAPAN TOBACCO & SALT PUBLIC CORPORATION, Minato-ku Tokyo 105 (JP)
(72) Inventor: OKA, Ichiro, Japan Tobac Inc. Hydroponics R&D Cent, Sashima-gun Ibaraki 306-04 -04 (JP); OHNO, Takahiro, Japan Tobacco Inc. Res. Lab., Toyoda-cho, Iwata-gun Shizuoka 438 (JP)
(74) Representative: Ruffles, Graham Keith
(86) International application number: JP9703664
(87) International publication number: WO9816097

(57) **Abstract**

A method for producing potato tubers by hydroponics, by which a number of tubers used as seed potatoes are produced, and by which the size distribution of the tubers is small, is disclosed. In the method of the present invention, shower of nutrient solution is given to the stolons.

## Description

### TECHNICAL FIELD

The present invention relates to a method for producing potato tubers by hydroponics. More particularly, the present invention relates to a method for producing potato tubers used as seed potatoes highly suited for storing and cultivation, which are free from diseases.

### BACKGROUND ART

Inventions relating to methods of producing seed potatoes using NFT (Nutrient Film Technique) are known and described in, for example, Japanese Laid-open Patent Application (Kokai) No. 5-284864.

In this method, the bottom of a bed for hydroponics is sloped, nutrient solution is flown on the bottom of the bed from upstream to downstream such that the nutrient solution forms a thin layer, and cultivating potato plants with the nutrient solution. This method is nothing more than that the method widely used for cultivating other crops such as tomatoes is applied to cultivation of potatoes. The conventional method will now be described in more detail. Open upper portion of a cultivation bed is covered with a light-intercepting cover having planting holes. A support made of polyurethane foam is mounted on the stem of each potato plant with 4-14 leaves, at the site above the 2nd to 5th leaf from the root, which plant was grown by tissue culture or the like, and the support is inserted in the planting hole in the cover. The potato plants are cultivated in this state without any member between the flow of the nutrient solution and the stolons so as to form seed potatoes.

However, the above-described conventional method has a problem that the number of produced seed potatoes is small. Further, the above-described conventional method has also a problem that the size of the produced potatoes vary widely because tuberization of the stolons largely varies, that is, the timing of tuber initiation differ from one stolon to another so that the tubers which started to grow at an early stage grow to unnecessary large sizes, and the tubers which started to grow at a late stage do not grow enough.

### DISCLOSURE OF THE INVENTION

Accordingly, an object of the present invention is to provide a method for producing potato tubers by hydroponics, by which a number of tubers used as seed potatoes are produced, and by which the size distribution of the tubers is small.

The present inventors intensively studied to discover that the above-mentioned object may be attained by giving shower of nutrient solution used for cultivating potatoes to stolons of potatoes during the cultivation by hydroponics, thereby completing the present invention.

That is, the present invention provides a method for producing potato tubers by hydroponics, characterized in that shower of nutrient solution is given to stolons.

By the method of the present invention, a number of tubers which may be used as seed potatoes are produced and the size distribution of the produced tubers may be made small. The number of tubers produced by the method of the present invention is large and the tubers produced by the method of the present invention are free from diseases and size distribution thereof is small, so that they are highly useful as seed potatoes suitable for cultivation and storage. Needless to say, the tubers produced by the method of the present invention are also good for table potatoes.

### BRIEF DESCRIPTION OF THE DRAWING

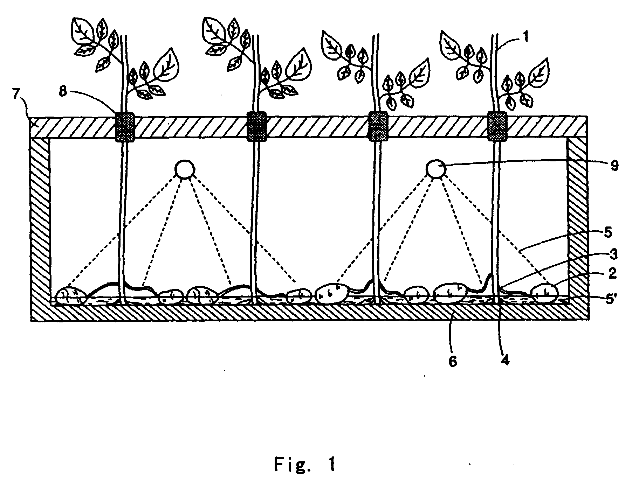

Fig. 1 is a schematic view for explaining the method according to an embodiment of the present invention.

### BEST MODE FOR CARRYING OUT THE INVENTION

The apparatus for hydroponics used in the method of the present invention is not restricted and any type of apparatuses for hydroponics may be employed. Preferred hydroponic apparatuses include NFT (Nutrient Film Technique). NFT are characterized in that a flow of the nutrient solution for hydroponics is formed on the horizontal or slant cultivation bed. More particularly, a bed having a depth of 10-50 cm, of which upper portion is open, may preferably be employed as a cultivation bed. The bed may be made of any material suited for hydroponics, which does not make the nutrient solution pass through. The bed may be assembled with plates of woods or polystyrene foam, and the inside of the bed may be covered with a plastic sheet so as to prevent the nutrient solution from leaking out. The depth of the nutrient solution in the above-mentioned flow is usually 0.5 - 3 cm, preferably not more than 1 cm.

The size of the bed may vary depending on the size of greenhouse, working method and the like, and usually 0.5-2 m in width and 0.5-50 m in length.

On the upper portion of the bed, a planting plate having planting holes with a diameter of about 1-3 cm therein is placed. Although the planting plate may be light-intercepting, the planting plate may preferably be made of a light-transmitting material such as polystyrene foam in order to make the inside of the bed dark from the tuber-initiation stage in order to synchronously induce tuberization on stolons. In cases where a light-transmitting planting plate is employed, the inside of the container may be made dark by placing a light-intercepting plastic sheet or a plate thereon. Although the planting plate may be a large one having planting holes arranged in a plurality of rows, it is convenient for the planting operation and the like to use planting plates each of which has one row of planting holes, a part of the side of the planting holes being open.

In appropriate sites in the bed, at least one inlet and at least one outlet of the nutrient solution are provided. The inlet is piped such that the nutrient solution transferred from a nutrient solution tank by a pump enters the bed. The nutrient solution in the bed is discharged through the outlet. Although the discharged nutrient solution may be discarded, the discharged nutrient solution is usually returned to the nutrient solution tank or to the bed so as to recycle the nutrient solution. Although the bed may be placed horizontally, the bed is preferably sloped to a gradient of 1/50 to 1/500.

The nutrient solution used in the method of the present invention is not restricted and may be any one with which potatoes can be cultivated. A preferred example of the composition of the nutrient solution is concretely described in the examples described below.

As the potato plants used in the method of the present invention, although usually available tubers and plantlets propagated by herbaceous cutting of sprouts may be employed, it is preferred to use plantlets propagated by tissue culture or the like, which are free from viruses and diseases. Nodal-propagated plants obtained by cultivating the plantlets propagated by tissue culture or the like in a greenhouse or the like so that they are not infected with pathogens may also be used.

The length of the stem of the plant may preferably be 5-40 cm, more preferably 15-30 cm.

In cases where plantlets grown by tissue culture are used, although the plantlets may be directly planted in the cultivation bed described below, it is preferred to plant the plantlets in a temporal bed other than the cultivation bed so as to acclimatize the plantlets and to grow the plants to the size appropriate for planting.

In the method of the present invention, potato plants may be planted in the above-mentioned NFT hydroponic apparatus by, for example, the method as follows. A part of the stem of the plant grown as described above is covered with an elastic support made of polyurethane foam or the like and the support is inserted into the planting hole formed in the planting plate of the NFT hydroponic apparatus, thereby planting the potato plant.

The position at which the support for planting is mounted may preferably be, for example, the portion of the stem below the second developing leaf from the top of the potato plant.

Shower may be applied to the stolons by, for example, pipes or plastic tubes having a number of holes in the lower portions thereof below the planting plate. The pipes or plastic tubes are connected to an inlet of the nutrient solution and the holes are opened in the downward and/or obliquely downward direction, so that the supplied nutrient solution hits the stolons and bases of the potato plants.

In a preferred embodiment, the diameter of the holes may preferably be about 1 to 3 mm (more preferably 1.5 to 2 mm) and the interval between the adjacent holes on a row may preferably be 1 to 5 cm. One to four rows of such holes may preferably be formed per one pipe or tube. Such pipes or tubes may be placed in parallel at a position higher than the stolons preferably by about 10 to 30 cm at an interval of preferably about 10 to 50 cm, so that the nutrient solution is uniformly sprinkled in the bed. The flow rate of the shower is not restricted and may preferably be about 3 to 15 liters per minute per 1 m² of the bed area of the hydroponic apparatus.

Although the shower may be given during the entire cultivation period from the planting to the harvesting, it is preferably supplied only between the time after the stolons grown and before the beginning of the tuber formation and the time of harvesting, more preferably between the time immediately before the tuber formation and the time of beginning of the growth of the tubers. In the period in which shower is given, it is preferred to give shower for 24 hours a day. However, shower may be given only during one or more time periods in a day.

Although the case where the NFT hydroponic apparatus is used has been described, the method of the present invention is not restricted to this case, but any methods in which shower is given to the stolons in hydroponics are included in the scope of the present invention.

In the method of the present invention, by giving physical stimulation by applying shower to the stolons, tuberization of the stolons synchronously starts, so that distribution of the growth among the stolons, and in turn, the size distribution of the produced tubers, may be decreased.

### Examples

The present invention will now be described more concretely by way of examples thereof. It should be noted, however, the examples below are presented for the illustration purpose only and should not be interpreted in any restrictive way.

### Example 1

### (1) Growing Disease-free Potato Plantlets Used as Plant Materials

Virus-free potato plantlets (variety: May Queen, obtained by growing the plantlets stored in Japan Tobacco Inc., Plant Breeding and Genetics Research Laboratory) cultured in test tubes (diameter: 2.5 cm, length: 12 cm) by a known method were used as the plant materials. The virus-free plantlets cultured in the test tubes (hereinafter also referred as "cultured plantlets" for short) had a length of about 5 to 7 cm and had about 4 to 6 leaves.

The cultured plantlets were cultivated by hydroponics in a plastic container (length: about 54 cm, width: about 35 cm, height: about 15 cm), thereby growing plants for planting. The base of each cultured plantlet was wrapped with a polyurethane foam cube and each plantlet was transplanted in a planting hole (1.5 cm in diameter, about 2.5 x 2.5 cm intervals) in a polystyrene foam plate floated on the nutrient solution in the plastic container. As the nutrient solution for hydroponics, a solution prepared by dissolving a commercial fertilizer for horticulture "Liquid Hyponex 5-10-5" (commercially available from HYPONECS CORPORATION) in 1000 volumes of water was used. The nutrient solution was aerated with a small air pump. The platelets were cultivated in a temperature-controlled greenhouse (the temperature in the greenhouse was about 20 to 25°C during daytime and about 15 to 18°C during nighttime, the length of the daytime is the same as that of the natural daytime) for 22 days. On the 22nd day of the cultivation, the plants had lengths of about 25 to 30 cm and about 9 to 11 leaves per plant.

These plants were planted in the apparatuses (a) and (b) prepared by modifying the commercial hydroponic apparatus "Home Hyponica 302" (commercially available from KYOWA CO., LTD.; size of container: about 67 x 66 cm, height: about 21 cm; the depth of the cultivation tray including the planting plate: about 7 cm) in the manner described below, in the number of 24 plants (6 plants x 4 rows, about 10 x 12 cm intervals) per apparatus, and cultivated in a temperature-controlled greenhouse. Three days after the planting, the upper surface of the planting plate and the side walls of each cultivation apparatus were covered with an opaque plastic sheet to darken the inside of the container. The tubers were harvested on the 98th day from the planting.

The nutrient solution basically contained 950 g of Ca (NO₃)₂·4H₂O, 800 g of KNO₃, 500 g of MgSO₄·7H₂0, 155 g of NH₄H₂PO₄ and minor elements (iron 3 ppm, boron 0.5 ppm, manganese 0.5 ppm, zinc 0.05 ppm, copper 0.02 ppm, and molybdenum 0.01 ppm) per 1000 liters of the nutrient solution. The electric conductivity at the time of planting was adjusted to about 1.5 mS/cm, that thereafter and before flowering was adjusted to about 1.5 to 2 mS/cm and that after flowering was adjusted to about 3 to 4 mS/cm. The pH was controlled to about 5 to 7.

Modifications for preparing the apparatuses (a) and (b) were as follows:
Apparatus (a): An apparatus used for carrying out a conventional method (NFT hydroponic apparatus, hereinafter also referred to as "conventional method group"). Polystyrene foam plates with a height of 10 cm were added to the side walls of the cultivation tray of the original apparatus so as to expand the tuber-forming space, and a polystyrene foam plate (planting plate) in which planting holes (diameter: about 1.5 cm, 6 holes x 4 rows = 24 holes, about 10 x 12 cm intervals) was placed thereon.
Apparatus (b): An apparatus used for carrying out the method of the present invention (Stolons were physically stimulated by giving shower thereto. Hereinafter also referred to as "shower group").

The apparatus (b) will now be described referring to Fig. 1 which schematically shows the apparatus (b). In Fig. 1, reference numeral 1 denotes potato plants, 2 denotes tubers, 3 denotes stolons, 4 denotes roots, 5 denotes the nutrient solution, 5' denotes the pass of the nutrient solution, 6 denotes the container, 7 denotes the planting plate, 8 denotes the polyurethane foam cubes for supporting the cultured plants 1 in the hole formed in the planting plate 7, and 9 denotes pipes.

Polystyrene foam plates (not shown in Fig. 1) with a height of about 15 cm were added to the side walls of the cultivation container 6 of the original apparatus. Two pipes 9 made of polyvinyl chloride were attached in parallel below the planting plate 7 at a position lower than the lower surface of the planting plate by about 3 cm. The distance between the pipe 9 and the side wall of the container 6 was about 15 cm (the distance between the two pipes 9 was about 30 cm). Each pipe 9 had 4 rows of holes with a diameter of about 1.5 mm formed at intervals of about 5 cm and each pipe 9 was set such that the holes faces downwardly. Each of the two pipes 9 was connected to a nutrient solution-supplying pipe (not shown). As shown in Fig. 1, the rows of the holes were arranged such that the angle formed by the lines between the center of the cross-section of the pipe and the each of the outermost rows was about 90°, and other two rows are arranged between the two outermost rows at about the same interval.

In the thus constructed apparatus (b), the nutrient solution 5 was supplied from an upper portion in the form of shower so as to stimulate the growing stolons 3. The flow rate of the shower was about 5 liters per minute per apparatus.

Tubers 2 were harvested on the 98th day from the planting. The results are shown in Table 1.

**Table 1**

| Yield of Tubers in Example 1 | | | | | | | | |
|---|---|---|---|---|---|---|---|---|
| Group | Number of Tubers per Plant | | | | | | | Weight of Tubers per Plant |
| | Size of Tuber | | | | | | | |
| | 100 g or more | 100-50 g | 50-10 g | 10-3 g | 3-0.1 g | Total | 100-10 g | g/plant |
| Shower | 0.2 | 2.0 | 5.9 | 2.5 | 2.8 | 13.3 | 7.9 | 305 |
| Conventional Method | 0.3 | 1.3 | 4.2 | 3.8 | 4.7 | 14.3 | 5.5 | 239 |
| Note: "Weight of Tubers per Plant" is the total of the weight of tubers of not less than 3 g. | | | | | | | | |

The shower group according to the present invention was superior to the conventional method group especially in that the number of produced tubers with weights of 100-10 g useful as seed potatoes, especially those with weights of 50-10 g, was larger than in the conventional method group. The size distribution of the tubers in the shower group according to the present invention was smaller than in the conventional method group.

### Example 2

As in Example 1, virus-free plantlets of variety May Queen were grown to obtain plants for planting.

These plants were planted in the same apparatus (a) and the apparatus (b) as used in Example 1. Twenty plants were planted in each apparatus.

As the nutrient solution, a solution prepared by dissolving a commercial fertilizer for horticulture "Fine Powder Hyponex 6.5-6-19" in 1000 volumes of water, to which nitrogen, calcium and magnesium were added to a concentration of 1 mmol/l each, and to which iron (60 µmol/l), manganese (19 µmol/l) and boron (3.7 µmol/l) were added, was used. Cultivation was carried out in a temperature-controlled greenhouse. On the 21st day from the planting, the tuber-forming space was darkened, and tubers were harvested on the 105th day from the planting.

The results are shown in Table 2.

**Table 2**

| Yield of Tubers in Example 2 | | | | | | | |
|---|---|---|---|---|---|---|---|
| Group | Number of Tubers per Plant | | | | | | Weight of Tubers per Plant |
| | Size of Tuber | | | | | | g/plant |
| | 100 g or more | 100-50 g | 50-10 g | 10-3 g | 3-1 g | Total | |
| Shower | 0.0 | 0.3 | 7.0 | 2.3 | 0.5 | 10.0 | 185 |
| Conventional Method | 0.2 | 0.8 | 1.8 | 0.6 | 0.3 | 3.5 | 126 |
| Note: "Weight of Tubers per Plant" is the total of the weight of tubers of not less than 3 g. | | | | | | | |

The number of produced tubers was larger in the shower group according to the present invention than in the conventional method group. The shower group according to the present invention was superior to the conventional method group especially in that the number of produced tubers with weights of 50-10 g which can be used as seed potatoes as they are without being cut, was larger than the conventional method group. The size distribution of the tubers in the shower group according to the present invention was smaller than in the conventional method group.

The tubers produced in Examples 1 and 2 according to the present invention were used as seed potatoes and compared with commercial seed potatoes. As a result, the tubers with weights of not less than 20 g, which were produced by the method of the present invention, had production abilities and cultivation characteristics comparable to those of the commercial seed potatoes.

Average weight of commercial seed potatoes is about 100 g and potato farmers plant the purchased seed potatoes after cutting them into half to quarter. Cutting of the potatoes requires much labor. Further, if a seed potato infected with a disease is contained, the disease may be infected to other potatoes during the cutting operation. In contrast, most of the tubers produced by the method of the present invention have sizes which are not necessary to be cut, and whole potatoes may be planted as they are, which is very advantageous.

## Claims

1. A method for producing potato tubers by hydroponics, characterized in that shower of nutrient solution is given to stolons.

2. The method according to claim 1, wherein said shower is supplied from said stolons from a plurality of holes formed in one or more pipes.

3. The method according to claim 2, wherein each of said one or more pipes have a plurality of rows of holes with diameters of 1-3 mm, which holes are formed at intervals of 1-5 cm along each of said rows.

4. The method according to claim 2 or 3, wherein said one or more pipes are arranged at a position higher than said stolons by about 10-30 cm.

5. The method according to any one of claims 1-4, wherein said shower is give at a flow rate of 3 to 15 liters per minute per 1 m² of bed area of hydroponic apparatus.

6. The method according to any one of claims 1-5, wherein said shower is given between the time after said stolons grown and before beginning of tuber formation and the time of harvesting.

7. The method according to any one of claims 1-5, wherein said shower is given between the time immediately before tuber formation and the time of beginning of growth of said tubers.
